# EUROPÄISCHE PATENTSCHRIFT

(11) **EP 2 699 415 B1**
(45) Veröffentlichungstag und Bekanntmachung des Hinweises auf die Patenterteilung: **13.07.2016**
(21) Anmeldenummer: 12728170.7
(22) Anmeldetag: 13.04.2012
(51) Int. Cl.: B32B 7/02, B32B 25/08, B32B 5/18, B32B 5/24, B32B 25/16, B32B 7/12, B32B 5/08, B32B 5/06, B32B 3/04, B32B 3/24

(54) **FLÄCHENFÖRMIGES VERBUNDELEMENT**
LAMINAR COMPOSITE ELEMENT
ÉLÉMENT COMPOSITE DE FORME PLATE

(30) Priorität: 19.04.2011 DE 102011018219
(43) Veröffentlichungstag der Anmeldung: 26.02.2014
(73) Patentinhaber: PLS Solutions GmbH, 61381 Friedrichsdorf (DE)
(72) Erfinder: SLAVICEK, Patrick, 61381 Friedrichsdorf (DE)
(74) Vertreter: Dr. Langfinger & Partner
(86) Internationale Anmeldenummer: PCT/EP2012/001617
(87) Internationale Veröffentlichungsnummer: WO 2012/143107

(56) Entgegenhaltungen:
- DE-U1- 7 621 838
- DE-U1- 29 603 630

## Beschreibung

Die vorliegende Erfindung betrifft ein flächenförmiges Verbundelement mit mindestens drei unterschiedlichen Schichten.

Aus der DE 295 15 667 sind elastische rutschhemmende Griffhilfen bekannt, die einem sicheren Griff zwischen der menschlichen Hand und einem zu handhabenden Gegenstand dienen. Diese Griffhilfen in Form eines Lappens, eines Tuches, einer Matte oder eines Handschuhs weisen auf beiden Seiten (der handzugewandten und der handabgewandten Seite) Noppen vorzugsweise in Form von Zylinderstümpfen mit einer bevorzugten Höhe von etwa 1 mm auf. Diese Griffhilfen verbessern zwar den Griff, haben jedoch den Nachteil, dass die Noppen auf der handzugewandten Seite insbesondere bei zeitlich länger andauerndem Umgreifen beim Benutzer in der Handoberfläche Druckbelastungen und Druckstellen erzeugen, die unerwünscht sind. Zudem sind derartige Noppenstrukturen nur schwer zu reinigen.

Aus der DE 86 13 545 ist eine Griffhilfe in Handschuhform mit einer die Haftung erhöhenden Ausstattung für die Benutzung von Riggs beim Surfen bekannt, bei der die Kraftübertragung dadurch verbessert wird, dass die Griffhilfe an ihrer Innenseite ein Kletthaftgewebe aufweist und Teile des Riggs komplementär mit einem korrespondierenden Klettflauschgewebe ausgestattet werden. Zur Verbesserung des Griffes der menschlichen Hand insbesondere auf glatten Oberflächen beispielsweise von Sportgeräten sind diese Griffhilfen jedoch nicht geeignet und auch zu aufwändig in der Nutzung. Hinzu kommt, dass sich im Klettflauschgewebe bei der Nutzung Staub- und Verunreinigungen ansammeln, die von Nutzern der Sportgeräte nicht akzeptiert werden.

Aus der DE 20 2008 001 385 ist ein textiler Griffschutz für Fitnessgeräte bekannt, der als Hygieneschutz-Umhüllung eingesetzt wird.

Aus der DE 296 03 630 ist ein Griffpolster für Sportler zur Verwendung beim Training mit Hanteln und an Fitnessgeräten bekannt, welches aus einem Polyurethanschaum mit definierten Eigenschaften besteht. Diese Griffpolster verbessern zwar die Haftung der Hand auf den zu manipulierenden Geräten, doch sind die Produkte aufgrund der Dicke von mindestens 10 mm relativ steif und die Haptik des Polyurethanschaums wird vom Benutzer nicht als angenehm empfunden. Zudem ist die Haftreibung des Polyurethanschaums auf den üblicherweise metallischen Oberflächen der Hanteln oder Fitnessgeräte nicht in vollem Umfang zufriedenstellend.

Aus der DE 203 10158 ist ein flächenhaftes Hilfsmittel zur Manipulation von Drehverschlüssen und zur Handhabung von Haushaltsgegenständen und Handwerkzeugen bekannt, welches aus einem mehrlagigen Verbundwerkstoff mit einem Trägermaterial besteht. Das Trägermaterial weist beidseitig eine Deckschicht aus Latex oder latexhaltigen Verbindungen auf oder ist vollständig von einer entsprechenden Deckschicht umgeben, wobei die Oberfläche der Deckschicht eine offenporige Struktur aufweist. Durch diese offenporige Struktur soll beim Ergreifen der zu manipulierenden Gegenstände quasi eine Saugwirkung erzeugt werden, die ein Verrutschen der Hand des Bedieners verhindert. Zudem sollen die offenen Poren die Aufnahme von Schweißabsonderungen ermöglichen. Allerdings erzeugen auch diese Produkte beim Benutzer ein unangenehmes haptisches Gefühl und die starke Schweißeinwirkung auf den Latex kann zu unangenehmer bakterieller Geruchsbildung führen.

Für die Verwendung im Sport- und Fitnessbereich sind auch Handschuhe aus Leder mit textilen Komponenten üblich. Diese unterliegen jedoch bei der Nutzung einem hohen Verschleiß durch auf der Innenhandfläche zwangsläufig vorhandene Nähte, die durch die Reibungseinwirkung an Hantelstangen oder Sportgeräten zerstört werden. Zudem werden auf der Handinnenseite nur niedrige Haftwerte zwischen der Hand des Benutzers und dem zu manipulierenden Gerät erreicht. Weiterhin führt eine kaum zu vermeidende Faltenbildung des Handschuhmaterials während des Trainings vor allem in Zusammenhang mit der Schweißbildung und der damit verbundenen erhöhten Empfindlichkeit der Haut zu Schmerzen durch Blasen- oder Wundbildung auf der Handinnenseite.

Es besteht daher nach wie vor ein Bedürfnis an Hilfsmitteln zur Manipulation von Gegenständen, insbesondere in Sport- und Fitnesseinrichtungen, die einerseits den gewünschten festen Griff zwischen der Hand des Benutzers und dem zu manipulierenden Gegenstand bewirken und andererseits die vorstehend geschilderten Nachteile nicht aufweisen.

Aus dem Sport- und Gymnastikbereich sind weiterhin Matten bekannt, die für Übungen Verwendung finden, die der Trainierende in sitzender oder liegender Position ausführt. Derartige Matten sollen einerseits mit der Oberfläche, auf der sie aufliegen, eine ausreichend hohe Haftreibung aufweisen, um ein Verrutschen auf der Oberfläche während der Übungen zu vermeiden, da dies eine Verletzungsgefahr birgt. Weiterhin sollen derartige Matten den Sportler auch thermisch von der in der Regel kalten Oberfläche, auf der diese Matten aufgelegt werden (Fußboden oder dgl.) thermisch ausreichend isolieren, um die Gefahr von Erkältungen und Verletzungen zu verringern. Die Oberfläche, mit der der Trainierende in Berührung kommt, soll eine hautangenehme Wirkung und Haptik aufweisen. Eine weitere Anforderung an diese dem Benutzer zugewandte Oberfläche ist die reversible Aufnahmefähigkeit für Feuchtigkeit (z. B. Körperschweiß des Benutzers).

Aus der DE 76 21 838 ist eine Turn- und Spielmatte mit einem Kern aus geschäumten Kunststoff mit einem textilen Flächengebilde auf einer Oberfläche und einem rutschhemmenden Flächengebinde auf der anderen Oberfläche bekannt.

Aufgabe der vorliegenden Erfindung war es, entsprechende Produkte für die erstgenannten Anwendungen zur Verfügung zu stellen.

Diese Aufgabe wird erfindungsgemäß durch die Gegenstände der unabhängigen Ansprüche 1 und 7 gelöst. Bevorzugte Ausführungsformen der vorliegenden Erfindung sind den Unteransprüchen und der nachfolgenden detaillierten Beschreibung zu entnehmen.

Unter flächenförmig im Sinne der vorliegenden Erfindung sollen dabei Elemente verstanden werden, deren Abmessungen in zwei Raumrichtungen, die eine Fläche aufspannen, deutlich größer ist als in der dritten Raumrichtung. Derartige Elemente werden oft auch als plattenförmig bezeichnet.

Die erfindungsgemäßen flächenförmigen Verbundelemente weisen eine erste Schicht a) auf der Basis von Mikrofasern oder Mikrofilamenten mit einer Feinheit von maximal 1,0 dtex auf.

Unter dem Begriff Mikrofaser versteht der Fachmann eine Zusammenfassung aus Fasern, die sehr fein und sehr dünn sind, was sich in der Feinheit wiederspiegelt. Mikrofasern weisen eine Stärke auf, die deutlich geringer ist als der Durchmesser menschlicher Haare und sind auch dünner als die dünnsten bekannten natürlichen Fäden auf der Basis von Seide. Die Feinheit in dtex gibt die Masse eines Fadens einer Länge von 10.000 m an, d.h. eine Feinheit von 1,0 dtex steht für eine Faser mit einer Masse von 1 g bei einer Länge von 10.000 m.

Bevorzugte Mikrofasern zur Verwendung in den erfindungsgemäßen Verbundelementen weisen eine Feinheit im Bereich von 0,01-0,9, insbesondere im Bereich von 0,1-0,8 dtex auf.

Um die feinen Mikrofasern nutzen zu können, werden sie in der Regel zusammengefasst und zu einem Faden gezogen, wodurch eine sehr weiche Struktur entsteht, die Produkte aber gleichzeitig weitgehend formstabil bleiben.

Die Schicht a) kann in Form eines Gewebes oder in Form eines Vlieses aus Mikrofasern oder Mikrofilamenten (nonwoven) vorliegen. Gewebe ist dabei der Oberbegriff für textile Flächengebilde aus mindestens zwei rechtwinklig oder nahezu rechtwinklig gekreuzten Fadensystemen. Die beiden Fasersysteme weisen also eine Relativorientierung zueinander auf, d.h. die Legung einzelner Fasern ist vorbestimmt. Vliese oder Vliesstoffe dagegen bestehen aus Fasern, deren Lage sich nur mit den Methoden der Statistik beschreiben lässt. Die englische Bezeichnung nonwoven (nicht gewebt) grenzt Vliese eindeutig von Geweben ab. Vliese werden häufig auch als Wirrfasermatten bezeichnet.

Mikrofasern können aus allen wichtigen Faserrohstoffen hergestellt werden und entsprechende Produkte sind dem Fachmann bekannt und im Handel erhältlich, so dass sich hier detaillierte Erläuterungen erübrigen. Dabei eignen sich grundsätzlich sowohl synthetische als auch natürliche Faserrohstoffe.

Gängige im Handel befindliche Produkte weisen häufig Mikrofasern aus Polyestern oder Polyamiden auf. Daneben kennt der Fachmann auch Mikrofaserprodukte aus Polyacrylnitril oder Zellulose um nur zwei weitere Beispiele zu nennen.

Lederartige gewebte Mikrofaser-Materialien oder Mikrofaser-Vliesstoffe auf der Basis von Polyestern oder Polyamiden sehen wie natürliches Leder aus und weisen auch eine entsprechend angenehme Haptik beim Anfassen auf. Die für den Benutzer angenehme Griffeigenschaft kann noch dadurch verstärkt werden, dass das Mikro Faser-Material in eine Polymermatrix, insbesondere eine Polyurethanmatrix, eingetaucht ist. Entsprechende Produkte weisen Eigenschaften im Hinblick auf das Anfühlen und das leichte Gewicht auf, die sogar besser als jene von natürlichem Leder sind.

Verfahren zur Herstellung von Produkten auf der Basis von Mikrofasern, die als Schicht a) in den Verbundelementen gemäß der vorliegenden Erfindung verwendet werden können, sind dem Fachmann ebenfalls bekannt und in der Literatur beschrieben.

Beim sogenannten Direktspinnprozess können Mikrofasern mit einer Feinheit von bis zu 0,1 dtex hergestellt werden; aufgrund der Neigung der einzelnen Elemente zum Zusammenkleben sind geringere Feinheiten auf diesem Wege jedoch nur schwer herzustellen.

Beim indirekten Spinnprozess wird in einer ersten Stufe eine Bikomponentenfaser produziert und in einem anschließenden zweiten Schritt aus dieser Bikomponentenfaser eine Komponente wieder herausgelöst.

Geeignete Mikrofaser-bzw. Mikrofilament-Produkte zur Verwendung als Schicht a) in den erfindungsgemäßen Verbundelementen sind unter den Handelsbezeichnungen Diolen^{®}-Mikro, Trevira^{®}-Finesse, Trevira^{®}-Micronesse (alle Mikrofasern auf Basis Polyester), Tectel^{®}-Micro, Mery^{®}-Microfibre (alle auf Basis Polyamid) (Dralon^{®}-Mikro, Mikro-PAC, Leacril^{®}-Mikro (alle auf Basis Polyacrylnitril), Fashmo^{®} (Produkt auf der Basis von Polyamid in Kombination mit Polyurethan) oder Evolon^{®}-Mikrofilamente bekannt.

In einigen Anwendungsfällen haben sich Produkte aus der Produktreihe Fashmo^{®} (Fa. Fashion and More) und Evolon^{®} (Fa. Freudenberg) als vorteilhaft herausgestellt.

Bei den Produkten aus der Produktreihe Fashmo^{®} handelt es sich um Gewebe aus Mikrofasern aus 70 Gew.% Polyamid und 30 Gew.% Polyurethan mit unterschiedlichen Dicken, die durch entsprechende Ziffern angegeben wird. So weist Fashmo^{®} DS 05P eine Dicke, gemessen nach ASTM D 1117 im Bereich von 0,5 mm auf, während Fashmo^{®} DS 07P eine Dicke von 0,7 mm hat. Weitere, vom Anbieter erhältliche Produkte sind Fashmo^{®} 10 PS, Fashmo^{®} DS 12 und Fashmo^{®} DS 14 mit Dicken von entsprechend etwa 1,0, 1,2 und 1,4 mm. Vom gleichen Anbieter sind auch Produkte auf der Basis von 70 Gew.% Polyester und 30 % Polyurethan bekannt, die unter dem Handelsnamen Chamude^{®} angeboten werden.

Evolon^{®} ist die Bezeichnung für nach einem speziellen Verfahren von Fa. Freudenberg erhältliche Produkte auf der Basis von Mikrofilamenten.

Die Schicht a) der erfindungsgemäßen Verbundelemente wird auf der der Hand des Benutzers zugewandten Seite angeordnet. Dadurch wird für den Benutzer bei der Nutzung ein angenehmer Griff erreicht, der auch bei längerer Nutzung, wie sie beim Training an Fitnessgeräten vorkommen kann, nicht unangenehm wird. Durch die Eigenschaft der Mikrofaserprodukte, Feuchtigkeit aufzunehmen wird auch der Schweißbildung des Benutzers bei der Nutzung Rechnung getragen. Die hohe Saugkraft der Mikrofaser wird durch die Vielzahl an Luftkammern und kleinen Poren in der Struktur hervorgerufen, wodurch eine Kapillarwirkung erzielt wird und der gebildete Schweiß des Benutzers zuverlässig von der Mikrofaser aufgenommen werden kann. Durch nachfolgendes einfaches Waschen oder Trocknen der erfindungsgemäßen Verbundelemente kann der absorbierte Schweiß aus den Mikrofasern wieder herausgelöst werden.

Durch die stumpfe Oberfläche werden auch bei der Nutzung als Griffhilfe für Fitnessgeräte hohe Reibwerte zwischen Hand und dem erfindungsgemäßen Verbundelement erzielt. Darüber hinaus ist die Oberfläche der Schicht a) sehr widerstandsfähig gegen die auftretende Reibung wie auch gegen UV Strahlung und zeichnet sich darüber hinaus durch eine gute Atmungsaktivität aus.

Bevorzugt als Schicht a) der erfindungsgemäßen Verbundelemente werden Produkte auf der Basis von Mikrofasern oder Mikrofilamenten verwendet, die nach geltenden Richtlinien als unproblematisch für den direkten Hautkontakt eingestuft und zertifiziert sind.

Die Stärke der Schicht a) unterliegt an sich keiner besonderen Beschränkung und kann entsprechend der Wünsche des Benutzers individuell eingestellt werden. In der Praxis haben sich Stärken einer Schicht a) im Bereich von 0,3-1,5 mm, vorzugsweise von 0,4-1,2 mm als ausreichend für die Erzielung der gewünschten Eigenschaften erwiesen.

Die Schicht a) der erfindungsgemäßen Verbundelemente kann je nach angestrebtem Einsatzgebiet auch antimikrobiell oder antistatisch ausgerüstet werden. Eine antistatische Ausrüstung kann durch Zusatz entsprechender Stoffe mit einer ausreichenden elektrischen Leitfähigkeit erzielt werden, zur antimikrobiellen Ausrüstung hat sich insbesondere die Verwendung von Silberverbindungen bewährt, die den Geweben oder Vliesen bereits bei der Herstellung beigegeben werden können. Entsprechende Produkte sind im Handel erhältlich und beispielsweise in der DE 20 2005 010 978 beschrieben.

Gemäß einer bevorzugten Ausführungsform kann die Mikrofaserschicht der erfindungsgemäßen Verbundelemente mit sehr feinen Löchern, einer sogenannten Mikroperforation, versehen werden. Die Abtrocknung der Mikrofaser und ggf. der darunter liegenden Schichten kann dadurch verbessert werden. Die Löcher sind dabei vorzugsweise so gestaltet, dass die Haptik der Mikrofaserschicht nicht beeinträchtigt wird und gleichzeitig auch die Reißfestigkeit ausreichend erhalten bleibt. Die Löcher solcher Mikroperforationen haben im allgemeinen einen Durchmesser im Bereich von 0.01 bis 3 mm, vorzugsweise im Bereich von 0,1 bis 2,5 mm und besonders bevorzugt im Bereich von 0,2 bis 1,5 mm.

Als Schicht b) enthalten die erfindungsgemäßen Verbundelemente eine Schicht aus einem Druckbelastungen dämpfenden Material. Grundsätzlich eignet sich jedes Material, welches unter Druckbeanspruchung eine ausreichende Elastizität aufweist. Unter Elastizität wird dabei die Eigenschaft eines Materials verstanden, unter Krafteinwirkung seine Form reversibel zu verändern, das heißt bei Wegfall der einwirkenden Kraft in seine Ursprungsform zurückzukehren.

Aus Gewichtsgründen haben sich als Material für die Schicht b) der erfindungsgemäßen Verbundelemente insbesondere Schaumstoffe, besonders bevorzugt elastische Schaumstoffe als vorteilhaft herausgestellt. Diese weisen zum einen die gewünschte druckdämpfende Wirkung auf und stellen andererseits sicher, dass das Gewicht der erfindungsgemäßen Verbundelemente nicht unerwünscht hoch wird.

Unter Schaumstoffen werden allgemein künstlich hergestellte Stoffe mit zelliger Struktur und niedriger Dichte verstanden. Grundsätzlich können fast alle Kunststoffe geschäumt werden und es sind eine Vielzahl unterschiedlicher Produkte im Handel erhältlich. Der Fachmann kennt in diesem Zusammenhang geschlossenzellige Produkte, bei denen die Wände zwischen den Zellen komplett geschlossen sind und bei denen eine Flüssigkeitsaufnahme weitgehend ausgeschlossen ist. Im Unterschied dazu ist bei offenzelligen Schaumstoffen eine in der Regel reversible Flüssigkeitsaufnahme in erheblichem Umfang möglich. Die aufgenommene Flüssigkeit kann später durch geeignete Trocknungsverfahren wieder aus dem Schaumstoff entfernt werden. Auch Mischformen sind bekannt und im Handel erhältlich. Damit kann die Feuchtigkeitsaufnahmefähigkeit der Schicht b) der erfindungsgemäßen Verbundelemente durch Wahl des geeigneten Schaumstoffs an die konkrete Nutzung angepasst werden.

In der Regel reichen die feuchtigkeitsabsorbierenden Eigenschaften der Schicht a) aus, um bei den meisten Anwendungen die bei der Nutzung der erfindungsgemäßen Verbundelemente zum Beispiel beim Sport oder beim Fitnesstraining entstehende Feuchtigkeit in Form von Schweiß aufzunehmen, so dass es nicht erforderlich ist, dass auch die Schicht b) Feuchtigkeit aufnehmen muss. Häufig ist es sogar vorteilhaft, wenn die Schicht b) keine Feuchtigkeit aufnimmt, da die Entfernung von Feuchtigkeit aus Schaumstoffen in der Regel aufwändiger und schwieriger zu bewerkstelligen ist als aus Geweben oder Vliesen aus Mikrofasern oder Mikrofilamenten, wie sie in der Schicht a) verwendet werden. In diesen Fällen werden daher vorzugsweise geschlossenzellige Schaumstoffe als Basismaterial für die Schicht b) eingesetzt.

Werden entsprechende Verbundelemente dagegen in Anwendungen eingesetzt, bei denen Flüssigkeitsmengen zu absorbieren sind, die das Aufnahmevermögen der Schicht a) übersteigen, können vorteilhaft offenzellige Schaumstoffe eingesetzt werden.

Bei der nicht erfindungsgemäßen Verwendung entsprechender Verbundelemente für Sport- oder Gymnastikmatten kann es vorteilhaft sein, wenn auch die Schicht b) Feuchtigkeit aufnehmen kann. In diesem Anwendungsbereich hat es sich in manchen Fällen als vorteilhaft erwiesen, wenn direkt mit der Mikrofaserschicht ein viskoelastischer Schaumstoff verbunden wird. Unter Viskoelastizität wird dabei die zeit-, temperatur- und frequenzabhängige Elastitzität eines Stoffes verstanden. Viskoelastische Stoffe weisen eine Spontanelastizität auf, die nach der Verformung im wesentlichen zeitunabhängig ist, während der viskoelastische Anteil der Verformung zeitabhängig ist. Entsprechende Verbundelemente mit viskoelastischen Schaumstoffen passen sich dem Körper an und geben dem Benutzer in gewissem Umfang das Gefühl schwerelos zu sein, was beim Training als sehr angenehm empfunden wird. Legt sich der Benutzer auf eine Matte aus einem entsprechenden Verbundelement mit einem viskoelastischen Schaumstoff so fühlt sich dieses zunächst relativ hart an. Durch die Körpertemperatur und das Gewicht des Benutzers passt sich das Material der Körperform des Benutzers sehr gut an und der Auflagedruck des Körpers auf der Matte wird über die gesamte Liegefläche minimiert, was beim Trainieren als sehr angenehm empfunden wird. Neben dem viskoelastischen Schaumstoff kann in den entsprechenden Verbundelementen noch eine oder mehrere nichtviskoelastische Schaumstoffschichten b) enthalten sein. Aus Kostengründen kann dies vorteilhaft sein, da viskoelastische Schaumstoffe in der Regel deutlich teurer sind als Schaumstoffe ohne viskoelastische Eigenschaften der vorstehend beschriebenen Art.

An Stelle eines viskoelastischen Schaumstoffs kann, soweit die vorstehend beschriebenen Eigenschaften der Viskoelastizität nicht als wesentlich erachtet werden, auch ein Faservlies mit der Mikrofaserschicht verbunden werden, wenn es in erster Linie darauf ankommt, die Feuchtigkeitsaufnahmefähigkeit der Mikrofaserschicht zu unterstützen bzw. zu erhöhen. Unter Vlies versteht der Fachmann dabei ein textiles Flächengebilde aus lose zusammenliegenden, nicht miteinander verbundenen Fasern.

Ebenfalls geeignet anstelle eines viskoelastischen Schaums oder eines Faservlieses sind Gewirke, die mit der Mikrofaserschicht verbunden werden können.

Unter Gewirken versteht der Fachmann allgemein aus Fadensystemen durch Maschenbildung hergestellte Stoffe, wobei zwischen zwei Arten von Gewirken unterschieden wird.

Kulierwirkware wird mit einem quer laufenden Faden gestrickt, der von mehreren Nadeln gleichzeitig erfasst und durch die jeweils vorhergehende Maschenreihe gezogen wird, wodurch stets neue Maschen entstehen.

Kettenwirkware wird im Unterschied zur Kulierwirkware mit vielen Fäden gestrickt. Die Fäden laufen dabei vertikal und werden dabei von den Nadeln ergriffen und durch die jeweils vorhergehende Maschenreihe gezogen. Um eine Fläche zu erzeugen, greifen die Nadeln abwechselnd auch benachbarte Fäden. Eine Vielzahl verschiedener Bindungen ist möglich.

Gewirke zeichnen sich durch eine gute Elastizität aus.

Materialien, aus denen Gewirke hergestellt werden können, sind dem Fachmann bekannt, so dass sich hier detaillierte Ausführungen erübrigen. Gewirke sind auch in großer Vielzahl kommerziell im Handel erhältlich und der Fachmann wird das jeweils passende Gewirk in Abhängigkeit vom gewünschten Eigenschaftsprofil wählen.

Das Gewirk kann bei Verwendung in den entsprechenden Verbundelementen eine variable Dicke aufweisen, wobei sich in bestimmten Anwendungsfällen Dicken im Bereich von 1-20 mm bewährt haben.

Das Gewirk wird vorteilhaft in geeigneter Weise mit der Mikrofaser verbunden und kann Schicht b) als Ganzes oder einen Teil der Schicht b) der entsprechenden Verbundelemente darstellen. Im letzteren Fall kann an die Gewirkschicht anschließend ein Schaumstoff wie hierin beschrieben angeordnet sein.

Bevorzugt wird bei Verwendung eines Gewirkes dieses in geeigneter Weise mit der Mikrofaser verbunden, was vorteilhaft ist um beispielsweise ein Ausfransen des Gewirks zu vermeiden.

Die Verbindung zwischen Gewirk und Mikrofaser wird vorzugsweise durch eine Verklebung vorgenommen. In manchen Fällen hat es sich bewährt, zusätzlich zur Verklebung oder anstelle einer Verklebung das Gewirk mit der Mikrofaser zu vernähen. Bevozugt erfolgt dies durch eine umlaufende Naht, in der Regel im Abstand von 1-2 cm vom Rand des Verbundelements, wobei beliebige Nahtformen, insbesondere auch verschiedenste Ziernähte möglich sind.

Im Falle einer Vernähung entsteht ein überstehender Randbereich der Mikrofaser, der vorzugsweise umgeschlagen und an der Unterseite der Schicht b) der entsprechenden Verbundelemente fixiert, vorzugsweise verklebt wird. Anschließend kann dann die Schicht c) mit dem erhaltenen Aufbau verbunden werden.

Durch diese Vorgehensweise können in vorteilhafter Weise im Fall der Vernähung Nähte auf der Unterseite des entsprechenden Verbundelements vermieden werden.

Auch wenn vorstehend die Vorteile einer Schicht aus einem viskoelastischen Schaumstoff bzw. eines Faservlieses oder eines Gewirks in erster Linie bei der nicht erfindungsgemäßen Anwendung im Bereich von Sport- und Gymnastikmatten beschrieben wurde, versteht es sich, dass auch bei der erfindungsgemäßen Anwendung entsprechender Verbundelemente als Griffhilfen eine entsprechende Anordnung bzw. Gestaltung vorteilhaft sein kann.

Elastische Schaumstoffe sind in unterschiedlichen Härtegraden erhältlich und durch die geeignete Wahl des Härtegrads kann die Schicht b) der erfindungsgemäßen Verbundelemente auf die spezifischen Gewohnheiten des entsprechenden Benutzers abgestimmt werden. Die Festigkeit oder der Härtegrad von Schaumstoffen wird üblicherweise über die so genannte Stauchhärte oder Druckspannung angegeben. Dabei wird die Kraft gemessen, die erforderlich ist, einen flächenförmigen Schaumstoff um einen bestimmten Prozentsatz zu stauchen, d.h. in seiner Dicke zu reduzieren. Die Druckspannung wird dabei nach ISO 7214 (1998) bestimmt. Im Rahmen der vorliegenden Erfindung haben sich im allgemeinen Druckspannungen zur Erzielung einer zehnprozentigen Stauchung im Bereich von 10-150 kPa, vorzugsweise im Bereich von 15 bis 100 kPa als geeignet erwiesen, womit im Regelfall ein ausreichender Härtebereich zur Anpassung an die individuellen Bedürfnisse eines jeden Nutzers abgedeckt werden kann.

Die elastischen Eigenschaften eines Schaumes werden in der Regel über den sogenannten Druckverformungsrest angegeben. Dies ist der prozentuale Anteil, bezogen auf die ursprüngliche Verformung, der nach einem bestimmten Zeitraum der Entspannung verbleibenden Verformung. Der Druckverformungsrest besonders geeigneter Schäume, gemessen nach ISO 7214 nach einer 25 % igen Verformung für 22 h bei 23 °C und 24 h Entspannung liegt im Allgemeinen im Bereich von 1 bis 15, vorzugsweise 2 bis 10 %.

Die Rohdichte von Schaumstoffen kann einen weiten Bereich überspannen, wobei Rohdichte und Härtegrad nicht zwangsläufig voneinander abhängig sein müssen. Ein schwerer Schaumstoff muss also nicht unbedingt eine größere Härte aufweisen als ein Schaumstoff mit einer geringeren Dichte. Die Dichte des verwendeten Schaumstoffs ist demzufolge für die Schicht b) der erfindungsgemäßen Verbundelemente nicht besonders kritisch und kann in genannten weiten Bereich überspannen. In der Praxis haben sich Schaumstoffdichten im Bereich von 5 bis 150 kg/m³, insbesondere im Bereich von 10 bis 100 kg/m³ bewährt.

Die Art des Polymers, aus dem der Schaumstoff hergestellt wird, ist im Rahmen der vorliegenden Erfindung nicht besonders kritisch; es eignet sich grundsätzlich alle Schaumstoffe, die die für die gewünschte Anwendung vorteilhafte Kombination von Eigenschaften aufweisen.

Geeignete elastische Schaumstoffe, insbesondere auch mit den vorstehend beschriebenen Dichten und Stauchhärten sind in einer Vielzahl von Varianten im Handel erhältlich.

In einigen Fällen haben sich Ethylen/Vinylacetat Mischpolymerisat-Schaumstoffe als Material für die Schicht b) der erfindungsgemäßen Verbundelemente bewährt. Besonders vorteilhaft können geschlossenzellige, vernetzte Produkte auf der Basis von Ethylen/Vinylacetat-Copolymeren eingesetzt werden, die eine Rohdichte im Bereich von 20 bis 100 kg/m³ aufweisen und die in unterschiedlichen Dicken von Fa. Zotefoams unter der Bezeichnung Evazote^{®} erhältlich sind. Hier seien die Typen Evazote^{®} VA 25, Evazote^{®} VA 35, Evazote^{®} VA 65 und Evazote^{®} VA 80 erwähnt, wobei die Ziffer jeweils für die Rohdichte des Schaumes in kg/m³ steht. Diese Produkte zeichnen sich durch eine hohe Haltbarkeit verbunden mit sehr guten Dämpfungseigenschaften aus, auch bei intensiver Belastung über längere Zeit.

Viskoelastische Schaumstoffe sind in der Literatur beschrieben und im Handel erhältlich. Teilweise werden diese auch als Slow Recovery Schaumstoffe bezeichnet. Geeignete Produkte sind unter den Handelsnamen Tempur^{®} oder BayFit^{®} erhältlich. Dabei handelt es sich bevorzugt um Schaumstoffe auf der Basis von Polyurethanen.

Die Schicht b) kann auch aus einer Kombination verschiedener Schaumstoffe mit unterschiedlichen Härtegraden oder Dichten aufgebaut sein, so dass sich die Dämpfungseigenschaften individuell auf die gewünschte Verwendung bzw. auf den Benutzer einstellen lassen.

Die Dicke der Schicht b) der erfindungsgemäßen Verbundelemente unterliegt an sich keiner besonderen Beschränkung. In der Praxis haben sich Dicken im Bereich von 1 bis 5 mm, vorzugsweise im Bereich von 1,5 bis 4 mm in einigen Fällen als vorteilhaft erwiesen um eine optimale Kombination der Eigenschaften zu erhalten.

Die erfindungsgemäßen Verbundelemente weisen eine Schicht c) aus einem Polymermaterial auf, dessen Haftreibungskoeffizient auf einer gegebenen Oberfläche um mindestens 30 % über dem Haftreibungskoeffizienten der Schicht a) auf der gleichen Oberfläche (des zu manipulierenden Gegenstands), gemessen unter identischen Bedingungen, liegt. Diese Eigenschaft der Schicht c) stellt sicher, dass die erfindungsgemäßen Verbundelemente auf der dem zu manipulierenden Gegenstand zugewandten und von der Hand des Benutzers abgewandten Seite eine gute Haftung mit dem zu manipulierenden Gegenstand aufweisen. Insbesondere beim Einsatz der erfindungsgemäßen Verbundelemente im Sport- und Fitnessbereich wird eine gewünschte rutschhemmende Wirkung realisiert, die die Sicherheit des Griffs, beispielsweise um eine Hantelstange oder dgl. verbessert. Damit wird ein Abrutschen der Hand von der Hantelstange oder allgemein dem zu manipulierenden Gegenstand wirkungsvoll verhindert und eine Unfall- oder Verletzungsgefahr reduziert.

Der Haftreibungskoeffizient steht für den Quotienten aus der Reibungskraft und der Normalkraft (Kraft senkrecht zur Fläche); er bestimmt also, wie groß die Reibungskraft im Verhältnis zur Normalkraft ist. Dabei ist die Haftreibungskraft als die Kraft definiert, die erforderlich ist, um eine Relativgeschwindigkeit größer Null der Schicht c) relativ zu einer Oberfläche zu erzielen.

Da die Schicht c) bei der Verwendung der erfindungsgemäßen Verbundelemente vorzugsweise im Sport- oder Fitnessbereich nicht mit der Hand des Benutzers in Berührung kommt, ist die haptische Beschaffenheit nicht von Bedeutung und es kann auf eine optimale und möglichst hohe Haftreibung mit dem zu manipulierenden Gegenstand abgezielt werden. Die Schicht c) kann zudem zur Dämpfung beitragen und damit die Wirkung der Schicht b) unterstützen.

Vorteilhaft werden als Materialien für die Schicht c) solche Polymermaterialien verwendet, die eine gute Haltbarkeit aufweisen, die der mechanischen Beanspruchung der erfindungsgemäßen Verbundelemente durch den gewünschten guten Haftungseingriff mit dem zu manipulierenden Gegenstand Rechnung trägt.

Vorteilhaft wird als Material für die Schicht c) ein Material mit geringer Feuchtigkeitsdurchlässigkeit verwendet. Insbesondere bei der bevorzugten Verwendung der erfindungsgemäßen Verbundelemente im Sport- und Fitnessbereich kann so verhindert werden, dass beispielsweise aus der Schweißbildung herrührende Feuchtigkeit die Haftreibung mit dem zu manipulierenden Gegenstand negativ beeinflusst. Neben der erhöhten Griffsicherheit ist dies auch aus hygienischen Gründen wünschenswert, um Schweißabsonderungen auf den Trainingsgeräten besser vermeiden bzw. reduzieren zu können. Die Dicke der Schicht c) liegt im allgemeinen im Bereich von 0,5 bis 5 mm, vorzugsweise im Bereich von 0,7 bis 3 mm.

Im Handel sind eine Reihe von Produkten kommerziell erhältlich, mit denen die vorstehend genannten gewünschten Eigenschaften für die Schicht c) erreicht werden können.

Eine besonders gut als Polymermaterial für die Schicht c) der erfindungsgemäßen Verbundmaterialien geeignete Produktklasse sind die sogenannten Chlorporen-Kautschuke, die in einer Vielzahl unterschiedlicher Typen kommerziell im Handel erhältlich sind. Im deutschen Sprachraum sind diese Produkte bekannt unter der Bezeichnung Neopren^{®}. Dabei handelt es sich um Synthesekautschuke auf der Basis von 2-Chlor-1.3-butadien, auch als Chloropren bezeichnet.

Durch Einsatz chemischer Treibmittel, welche unterhalb der Vulkanisationstemperatur des Kautschuks Gase freisetzen lassen sich druckbeständige Schaumstoffe erhalten. Polychloropren läßt sich mit anderen Polymeren zu Polymerblends verarbeiten. Mit Naturkautschuk oder auch Polybutadien läßt sich die Tieftemperaturflexibilität verbessern und gleichzeitig die Kosten senken und mit Styrol/Butadien-Kautschuk läßt sich die Kristalisationsneigung verringern, die zu einer Versprödung führen kann.

In geschäumtem Chloropren-Kautschuk sind viele kleine Gasbläschen gleichmäßig verteilt, weshalb dieses Material hervorragende thermische Isoliereigenschaften besitzt.

Chloropren-Kautschuke sind unter den Bezeichnungen Neoprene^{®} von Fa. DuPont und unter der Bezeichnung Baypren^{®} von Fa. Lanxess erhältlich. In einigen Fällen haben sich in den erfindungsgemäßen Verbundelementen für die Schicht c) Produkte auf Basis Chloropren-Kautschuk bewährt, wie sie von Fa. Sedo Chemicals Neoprene GmbH unter der den Bezeichnungen Neopren^{®} LS, S, HS, und HHS erhältlich sind. Dabei steigt der Deformationsdruck um eine 25-%ige Stauchung zu erreichen, in dieser Reihenfolge von 15-35 auf 55-80 kPa an (gemessen nach ASTM D-1056).

Die erfindungsgemäßen Verbundelemente weisen mindestens je eine der Schichten a), b) und c) auf; es ist jedoch auch ohne weiteres möglich, mehrere dieser Schichten vorzusehen, um das Eigenschaftsprofil nach der angestrebten Verwendung bzw. auf den jeweiligen Nutzer einzustellen.

Abhängig von der Zahl der Schichten ergibt sich auch die Gesamtdicke der erfindungsgemäßen Verbundelemente, die im Allgemeinen zwischen 2 und 25 mm, vorzugsweise im Bereich von 3 bis 15 mm liegt, besonders vorteilhaft im Bereich von 3 bis 10 mm.

Die Schichten der erfindungsgemäßen Verbundelemente werden in an sich bekannter Weise dauerhaft durch Verkleben oder ein anderes geeignetes Verfahren miteinander verbunden. Die Verbindung muss ausreichende Festigkeit aufweisen, um eine Delaminierung beim Einsatz zu vermeiden. Klebeverfahren haben sich hierbei als geeignet erwiesen; dem Fachmann sind aber auch andere verfahren bekannt, wie Schichten des Typs a) bis c) mit ausreichender Festigkeit miteinander verbunden werden können. Hier sei nur stellvertretend die Kaschierung als ein Beispiel erwähnt.

Die Dimensionen der erfindungsgemäßen Verbundelemente unterliegen an sich keiner besonderen Beschränkung und die flächenhafte Form kann beliebige geometrische Strukturen annehmen, z.B. rechteckig, quadratisch, elliptisch, kreisförmig, oval oder andere bekannte Formen.

Für die besonders bevorzugte Verwendung im Sport- und Fitnessbereich haben sich im allgemeinen quadratische oder rechteckige Formen bewährt, da mit derartigen Formen z.B. Hantelstangen oder Holme oder dgl. von Fitnessgeräten besonders gut und sicher umfasst werden können. Die Abmessungen der erfindungsgemäßen Verbundelemente sollten so gewählt werden, dass die Handfläche des Benutzers möglichst weitgehend auf dem Verbundelement zu liegen kommt, wenn dieses im Einsatz ist. Flächenförmige Elemente mit Abmessungen im Bereich von 80 bis 180 mm in den beiden Richtungen der flächigen Ausdehnung bei einer Gesamtdicke wie vorstehend beschrieben haben sich als besonders vorteilhaft erwiesen.

Bei der nicht erfindungsgemäßen Verwendung entsprechender Verbundelemente als Sport- oder Gymnastikmatten sind selbstverständlich andere Abmessungen möglich und erforderlich.

Die Kanten und Ecken der erfindungsgemäßen Verbundelemente können vorzugsweise abgerundet werden, um eine angenehmere Benutzung zu ermöglichen.

Aus der vorstehenden Beschreibung geht hervor, dass die Schichten a) und c) die äußeren Schichten des Verbundelements bilden, welche die Schicht b) auf jeweils einer deren Oberflächen bedecken. Bei der Anwendung wird das Element dergestalt eingesetzt, dass die Schicht a) zur Handfläche des Benutzers und die Schicht c) zur Oberfläche des zu manipulierenden Gegenstands weist.

Die Schichten der erfindungsgemäßen Verbundelemente können zu werblichen Zwecken oder zu Zwecken der Unterscheidung verschiedener Produkttypen (beispielsweise unterschiedliche Härte oder Gesamtdicke) mit Aufdrucken versehen oder eingefärbt werden.

Die Verbundelemente können weiterhin auf der der Hand zugewandten Seite mit Befestigungselementen versehen werden, mit denen ein verbesserter Halt der Verbundelemente in der Hand des Benutzers sichergestellt werden kann. Hier seien nur beispielhaft Schlaufen oder ähnliche Elemente genannt.

Die erfindungsgemäßen Verbundelemente eignen sich ganz allgemein zur Manipulation von Gegenständen jeglicher Art, bei der einerseits eine angenehme Nutzung und andererseits ein sicherer Griff angestrebt werden. Durch die Kombination der verschiedenen Schichten ist eine individuelle Anpassung an die angestrebte Nutzung leicht möglich.

Besonders vorteilhaft eigen sich die erfindungsgemäßen flächenförmigen Verbundelemente als Hilfsmittel bei der Bedienung von Sport- und Fitnessgeräten, bei denen zum einen ein fester Griff und zum anderen eine angenehme Haptik für den Benutzer erwünscht sind.

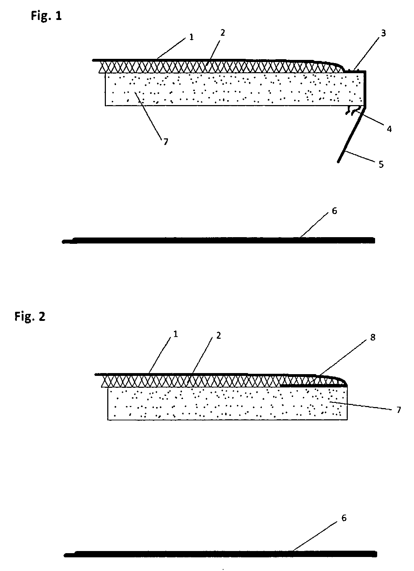

Die Figuren 1 bis 3 zeigen bevorzugte Ausführungsformen erfindungsgemäßer Verbundelemente mit verschiedenen Möglichkeiten der Verbindung der einzelnen Schichten.

Figur 1 zeigt ein erfindungsgemäßes Verbundelement mit einer Mikrofaserschicht 1 und einer ersten Schicht b) aus einem viskoelastischen Schaumstoff, Faservlies oder Gewirk 2, welches mit der Mikrofaserschicht durch eine Außennaht 3 vernäht ist, die durch eine weitere, Druckbelastungen dämpfende, Schicht 7 hindurchgeht, d.h. die Enden der Naht treten an der Unterseite der Schicht 7 aus und bilden einen inneren Nahtabschluss 4. Ein überstehendes Ende 5 der Mikrofaserschicht 1, welches durch die Außennaht 3 entsteht, wird umgeschlagen und von unten mit der Schicht 7 verklebt. anschließend wird der so entstandene Teilverbund mit einer Schicht c) (6) zum erfindungsgemäßen Verbundelement vervollständigt.

Figur 2 zeigt eine etwas abgewandelte Ausführungsform eines erfindungsgemäßen Verbundelements, bei dem ein loses Ende 8 der Mikrofaserschicht 1 unter die Schicht 2 umgeschlagen und anschließend das so entstandene Element mit der Schicht 7 verklebt wird. Bei der Gestaltung gemäß Fig.2. hat es sich als vorteilhaft erwiesen, ausreichend Material der Mikrofaserschicht 2 umzuschlagen, um die Belastbarkeit der Kanten zu erhöhen und die Stabilität des Verbundelements zu verbessern. Hier haben sich Umschlagbreiten im Bereich von 1-8 cm in vielen Fällen aus ausreichend und vorteilhaft herausgestellt. Auf eine Vernähung kann bei dieser Ausführungsform in der Regel verzichtet werden.

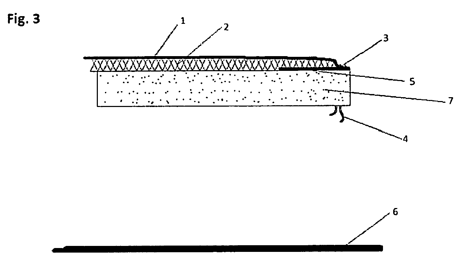

Figur 3 zeigt eine weitere Ausführungsform eines erfindungsgemäßen Verbundelements. In diesem Fall wird das überstehende Ende 5 der Mikrofaser, welches durch die Außennaht 3 entsteht, unter die Schicht 2 umgeschlagen (wie gemäß der Variante in Fig.2), und die Naht wird durch die Schicht 7 geführt, so dass sich die freien Nahtenden an der Unterseite der Schicht 7 befinden. Wie in der Ausführungsform gemäß Fig. 1 sind alle Nahtabschlüsse innenliegend.

### Beispiel 1

Ein Verbundelement gemäß der Erfindung wurde hergestellt durch Verkleben in an sich bekannter Weise von Schichten a bis c) wie folgt:
Schicht a): 0,7 mm starke Schicht aus Fashmo^{®} DS 07P der Fa. Fashion and More, einem Mikrofasergewebeauf der Basis von 70 Gew.% Polyamid/30 Gew,% Polyurethan mit einem Flächengewicht von 230 g/m² und einer Reißfestigkeit nach ASTM D 2261 von 2,5 kg in beiden Flächenrichtungen
Schicht b): 2 mm starke Schicht aus Evazote^{®} VA 35 der Fa. Zotefoams, einem geschlossenzelligen vernetzten Ethylen/Vinylacetat-Schaumstoff mit einer Rohdichte von 35 kg/m³ und einem Druckverformungsrest (22 h, 25 % Verformung, 24 h Entspannung, jeweils bei 23 °C) von 3,5 %
Schicht c): 2 mm starke Schicht aus Neoprene S der Fa. Sedo Neoprene Chemicals mit einem 25% Deformationsdruck nach ASTM D-1056 von 25 -45 kPa und einer Dichte von 170 kg/m³.

Dieses Verbundelement wurde bei der Bedienung von Fitnessgeräten eingesetzt und zeichnete sich durch eine sehr gute und angenehme Handhabung und Haptik für den Benutzer bei gleichzeitig sehr guter Griffsicherheit aus. Die Schicht a) absorbierte auch den Schweiß des Benutzers sehr gut, was zur angenehmen Handhabung beitrug. Die aufgenommene Feuchtigkeit konnte leicht durch Trocknen wieder entfernt werden. Das Verbundelement zeichnete sich auch nach häufiger Benutzung und nach mehrmaligem Waschen weiterhin durch dieses positive Eigenschaftsspektrum aus.

## Patentansprüche

1. Verwendung als Griffhilfe zur Manipulation von Gegenständen im Sport- und Fitnessbereich eines flächenförmigen Verbundelements mit
a) mindestens einer Schicht aus einem Vlies oder Gewebe auf der Basis von Mikrofasern mit einer Feinheit von maximal 1,0 dtex,
b) mindestens einer Schicht aus einem Druckbelastungen dämpfenden Material, und
c) mindestens eine Schicht aus einem Polymermaterial, dessen Haftreibungskoeffizient auf einer gegebenen Oberfläche des zu manipulierenden Gegenstands um mindestens 30% über dem Haftreibungskoeffizienten der Schicht a) auf der gleichen Oberfläche, gemessen unter identischen Bedingungen, liegt, wobei die Schichten a) und c) die äußeren Schichten des Verbundelements bilden, welche die Schicht b) auf jeweils einer deren Oberflächen bedecken, wobei die Schicht a) auf der der Hand eines Benutzers zugewandten Seite angeordnet ist und die Schicht c) auf der dem zu manipulierenden Gegenstand zugewandten Seite und von der Hand des Benutzers abgewandeten Seite angeordnet ist.

2. Verwendung nach Anspruch 1, **dadurch gekennzeichnet, dass** die Schicht a) perforiert ist.

3. Verwendung nach Anspruch 1 oder 2, **dadurch gekennzeichnet, dass** das dämpfende Material der Schicht b) ein Schaumstoff ist.

4. Verwendung nach Anspruch 3, **dadurch gekennzeichnet, dass** der Schaumstoff aus einem Mischpolymerisat aus Ethylen und Vinylacetat hergestellt ist.

5. Verwendung nach einem der Ansprüche 1 bis 4, **dadurch gekennzeichnet, dass** das Polymermaterial der Schicht c) ein Chloropren-Kautschuk ist.

6. Verwendung nach einem der Ansprüche 1 bis 5, **dadurch gekennzeichnet, dass** als Bestandteil der Schicht b) ein viskoelastischer Schaumstoff, ein Faservlies oder ein Gewirk enthalten ist.

7. Griffhilfe nach einem der Ansprüche 1 bis 6 zur Manipulation von Gegenständen bei der Nutzung von Fitnessgeräten.

## Claims

1. Use of a sheet-like composite element as a grip aid for manipulating objects employed in the sport and fitness sector, said composite element having
a) at least one layer of a non-woven material or a textile web based on microfibers of a fineness of at most 1.0 dtex,
b) at least one layer made of a pressure load damping material, and
c) at least one layer of a polymeric material the coefficient of friction of which on a given surface of the object to be manipulated is at least 30% greater than the coefficient of friction of the layer a) on the same surface, measured under identical conditions, wherein the layers a) and c) form the outer layers of the composite element, each of which covers one of the surfaces of the layer b), wherein the layer a) is arranged on the side facing the hand of the user and the layer c) is arranged on the side facing towards the object to be manipulated and away from the hand of the user.

2. Use according to Claim 1, **characterized in that** the layer a) is perforated.

3. Use according to Claim 1 or 2, **characterized in that** the dampening material of layer b) is a foam material.

4. Use according to Claim 3, **characterized in that** the foam material is produced from a mixed polymer of ethylene and vinyl acetate.

5. Use according to any of Claims 1 to 4, **characterized in that** the polymeric material of layer c) is a chloroprene rubber.

6. Use according to any of Claims 1 to 5, **characterized in that** a viscoelastic foam material, a fibrous non-woven material or a knitted fabric forms a component of layer b).

7. Grip aid according to any of Claims 1 to 6 for the manipulation of objects used for the handling of fitness equipment.

## Revendications

1. Utilisation, comme aide à la préhension pour la manipulation d'objets dans le domaine du sport et du fitness, d'un élément composite de forme plate comportant
a) au moins une couche en un non-tissé ou un tissé à base de microfibres ayant une finesse de 1,0 dtex au maximum,
b) au moins une couche en un matériau amortissant les charges de compression, et
c) au moins une couche en un matériau polymère dont le coefficient de frottement statique sur une surface donnée de l'objet à manipuler est supérieur d'au moins 30 % au coefficient de frottement statique de la couche a) sur la même surface, mesuré dans des conditions identiques, sachant que les couches a) et c) forment les couches extérieures de l'élément composite, qui recouvrent respectivement la couche (b) sur chacune de ses surfaces, sachant que la couche a) est disposée sur le côté tourné vers la main d'un utilisateur, et que la couche (c) est disposée sur le côté tourné vers l'objet à manipuler et opposé à la main de l'utilisateur.

2. Utilisation selon la revendication 1, **caractérisée en ce que** la couche a) est perforée.

3. Utilisation selon la revendication 1 ou 2, **caractérisée en ce que** le matériau amortisseur de la couche (b) est un matériau mousse.

4. Utilisation selon la revendication 3, **caractérisée en ce que** le matériau mousse est fabriqué à partir d'un copolymère d'éthylène et d'acétate de vinyle.

5. Utilisation selon l'une des revendications 1 à 4, **caractérisée en ce que** le matériau polymère de la couche c) est un caoutchouc chloroprène.

6. Utilisation selon l'une des revendications 1 à 5, **caractérisée en ce qu'**un matériau alvéolaire viscoélastique, un non-tissé de fibres ou un maillé est contenu comme composant de la couche b).

7. Aide à la préhension selon l'une des revendications 1 à 6 pour la manipulation d'objets lors de l'utilisation d'appareils de fitness.
